# EUROPEAN PATENT SPECIFICATION

(11) **EP 4 096 566 B1**
(45) Date of publication and mention of the grant of the patent: **23.04.2025**
(21) Application number: 21702483.5
(22) Date of filing: 28.01.2021
(51) Int. Cl.: A61C 1/07, A61C 3/03, A61C 17/16, A61C 17/18, A61C 17/20

(54) **TOOL FOR A DENTAL TREATMENT**
INSTRUMENT FÜR EINE ZAHNÄRZTLICHE BEHANDLUNG
INSTRUMENT POUR TRAITEMENT DENTAIRE

(30) Priority: 28.01.2020 EP 20154169; 28.01.2020 EP 20154168
(43) Date of publication of application: 07.12.2022
(73) Proprietor: Ferton Holding S.A., 2800 Delémont (CH)
(72) Inventor: BIENAIME, Alex, 39220 Les Rousses (FR)
(74) Representative: Müller Schupfner & Partner Patent- und Rechtsanwaltspartnerschaft mbB (Muc)
(86) International application number: PCT/EP2021/052037
(87) International publication number: WO 2021/152048

(56) References cited:
- WO-A1-2018/214386
- CN-A- 106 491 229
- US-A1- 2002 040 198
- US-A1- 2002 127 512

## Description

The present invention concerns a tool for a dental treatment according to the appended claims.

Particularly, the present invention concerns a tool for a dental treatment that performs a vibration movement such as an oscillating movement during its operation. For example, the tool is an ultrasonic scaler that is intended for removing dental calculus during a dental treatment.

Dental calculus develops mostly in mouth areas that are difficult to access, in particular during home care treatments, for example by a toothbrush or a water spray treatment. These areas are also difficult to access during a professional care treatment, especially during scaling, and calculi formed are hard and strongly attached to the teeth.

Ultrasonic scaling instruments are well known to remove hard calculus due to their power of ultrasonic vibrations and their low impact on teeth. A removal capacity of the ultrasonic scaling instrument is achieved by their ultrasonic vibrational power. Typically, such an ultrasonic scaling instrument includes a transducer. The transducer being used for creating the desired vibrational movement usually includes a sonotrode, piezo elements and a back mass, being rigid and dense. In particular, the piezo elements, in particular a stack of piezo elements, is located between the back mass and the sonotrode. The piezo elements cause an extension of their dimension in a direction being parallel to the vibration direction, and thus actuate the sonotrode to perform the vibration. The back mass in this case forms a counterbalance such that the vibrational movement of high amplitude is mainly realized at the sonotrode, in particular at the front-end or distal end of the sonotrode, facing away from the piezo elements and away from the dentist. In particular, the transducer is configured such that a vibration node is realized close to the piezo elements.

For fixing such a transducer to the housing, in particular, in the inside of the housing, it has been established to use fixing elements, which protrude inwardly from the inside of the housing for sandwiching a collar section of the transducer, the collar section being located close to the node. Alternatively, two O-rings are used, which are located close to the node for fixing the transducer against an axial shaft of the transducer. Such O-rings also seal the piezo elements from being affected from water being necessary to clean the handpiece for meeting the hygienic standards of the tool being discussed here.

Considering the above, it is an object of the present invention to improve the tools for a dental treatment, in particular by reducing the number of components for fixing the transducer to the housing, reducing the damping effects of the fixation to the vibrational movement of the transducer during operation, simplifying handling of the tool and meeting the hygienic requirements being necessary for the tool.

CN 106 491 229 A discusses a transducer including a mobile jib of a horn at a front end and piezoelectric ceramics at middle part and rear end. US 2002 127 512 A1 discloses an adapter for use with a piezoelectric and/or magnetostrictive ultrasonic unit can be coupled between the handpiece and the cable. US 2002 040 198 A1 concerns an ultrasonic insert which carries a rotary bearing adjacent to the transducer, the bearing slidably engaging an ultrasonic handpiece. WO 2018 214 386 A1 deals with an anti-rotating structure used in a handle of an ultrasonic dental descaler, comprising a transducer, a rear snap ring and a handle housing.

The problem is solved by a tool according to claim 1. Further, embodiments of the invention are described in the description, the figures and the dependent claims.

According to a first aspect a tool for a dental treatment, preferably a scaler, is provided, comprising
- a handpiece having a housing and
- a transducer having at least one piezo element for causing a vibration movement along a vibration direction,
the transducer being connected to the housing by a snap connection, in particular a press fit connection, for an axial fixation.

Contrary to the state of the art it is provided, according to the present invention, to realize a snap connection between the inside of the housing and the transducer and to use this snap connection for establishing an axial fixation of the transducer inside of the housing. As a consequence, it is possible in an advantageous manner to avoid a plurality of components, which are otherwise needed, such as O-rings or strut elements extending inwardly from the inner side of the housing for sandwiching the collar section of the transducer, in particular of the sonotrode.

Furthermore, it turned out that it is possible to establish a rigid and stable connection between the housing and the transducer by such a snap connection, in particular with a reduced damping effect, which affects the vibrational movement of the transducer otherwise. According to the present invention the snap connection is realized by a hook-like, harpoon-like or an anchor-like snap element being located at the inner side of the housing and/or the outer side of the transducer. In particular, it is provided that the hook-like, harpoon-like or anchor-like snap element includes a ramp-like structure, wherein a slanted side wall section, forming the ramp, is facing to the distal end of the housing of the tool in the assembled state, while a wall section preferably extending radially is intended to form a form-fitting connection with a corresponding recess in a direction parallel to the axial direction or vibrational direction. Thus, it is possible to insert the transducer from the rear or proximal end of the housing and push it until the ramp-like connection interacts with a corresponding recess by snapping and establishing the desired axial fixation by a form-fitting connection along the axial direction, i. e. along a direction being parallel to the vibrational direction.

According to a preferred embodiment, it is provided that for fixing the transducer against rotation about an axis being parallel to the vibration direction, the transducer and housing interact with each other in a form-fitting manner along a circumferential direction. As a result, it is possible to prevent the transducer from rotating about the axis being parallel to the vibration direction. The circumferential direction is parallel to a direction being assigned to a movement of an outer section of the transducer, when the transducer is rotated around the axis being parallel to the vibration direction. Preferably, it is provided that the housing and the transducer, in particular the sonotrode, include corresponding protrusions and/or recesses, which are complement to each other in the assembled state. Preferably, it is provided that the protrusions and/or recesses, being used for the snap connection and for the form-fitting connection for avoiding any rotational movement of the transducer, are located close to each other, in particular close to the node of the vibration.

Preferably, it is provided that a profile for the snap connection and/or the form-fitting connection is provided at a collar section of the transducer, in particular of the sonotrode of the transducer. As a result, it is possible to realize the connection between the housing and the transducer at a location being at or close to the node of the vibrations during operation. Consequently, the amplitudes of the vibrational movement are as small as possible in the region of the collar section, being located close or at the node section, such that the effect of fixing the transduce to the housing to the vibrational movement is comparable small. Furthermore, the collar section is used for aligning the transducer concentric in the housing, the housing being preferably sleeve-like, by having a circular shape. As a result, the collar section is guided by the inner side of the housing during assembling the tool.

According to the invention, it is provided that for bearing and/or for sealing the transducer, the transducer is surrounded by a filling element at a distal end of the housing. Instead of using O-rings, being located inside of the housing, in particular close to the node of the vibration of the transducer, the fixation by the snap connections also allows to locate a filling element for sealing at the distal end of the housing. As a result, it is possible to realize a waterproof tool or handpiece, which does not need to be disassembled for cleaning. Such a cleaning is otherwise necessary for meeting the requirements of hygiene. The filling element is preferably shaped as a ring-like element and the sonotrode of the transducer passes through the ring and is guided by the inner side of the filling element. In particular, it is provided that the filling element seals the inside of the housing from the outside of the handpiece. Especially, by using said filling element it is possible to avoid an arrangement of an O-ring and a piezo element, as it is known from the prior art, creating an inner space, which cannot be prevented from contaminations and which is hard to clean or to sterilize. Actually, the use of the filling element, in particular having several lips for avoiding a contamination inside the tool, makes a cleaning even superfluous.

In particular, the term "bearing" means that the transducer is positioned or arranged concentrically by means of the filling element, in particular with respect to an outlet opening at the distal end of the housing.

Furthermore, it is provided that the housing has a cross section, which continuously decreases from the proximal end to the distal end. In other words: The housing, in particular, sleeve-like housing of the handpiece tapers into the direction of the distal end of the housing. This simplifies gripping and handling of the handpiece and especially allows the operator to grip the handpiece at each position in the distal end section of the housing.

Preferably, it is provided that the filling element has a ring-shaped form, the filling element comprising at least one protrusion, preferably at least one lip, at an inner side of the ring-shaped filling element, the protrusion facing to the transducer. In particular, it is provided that the at least one protrusion contacts the outer surface of the sonotrode along a line-like section extending along the circumference of the sonotrode. Thus, it is possible that the filling elements act on the sonotrode for positioning homogeneously from all sides. Furthermore, it is possible to reduce the contact area between the sonotrode and the filling element, such that any kind of damping effect of this contact to the vibration motion of the sonotrode is reduced as much as possible. Preferably, it is provided that the at least one protrusion is located at a rear, i. e. proximal end of the filling element while at least one further protrusion is located at the distal end of the filling element. The at least one further protrusion at the distal end of the filling element is preferably intended to prevent dust or dirt from entering into the inside of the housing. In other words: it is the task of the at least one protrusion to bear and position the sonotrode, while the task of the at least one further protrusion is to seal the handpiece.

Preferably, it is provided that the at least one protrusion and the at least one further protrusion distinguish from each other by their geometric shape and/or their material composition. Thus, the at least one protrusion and/or the at least further protrusion can be optimized to their task, namely performing either the positioning of the sonotrode to locate the sonotrode concentric to the housing and/or for sealing the housing for making the handpiece waterproof.

Preferably, it is provided that the filling element is at least partially elastic for generating a sufficient sealing. Preferably, it is provided that a cap, preferably a metallic cap, is arranged at the distal end of the housing, in particular at an outer side of the distal end of the housing. Especially, the cap is used for fixing the filling element at the distal end of the housing. For example, it is provided that the filling element is located between a front side of the cap and a front-side of the distal end of the housing, such that the filling element is sandwiched between the front side of the cap element and the front side of the housing. Preferably, the cap includes an opening, the sonotrode and preferably the front side of the filling element passing through this opening. In particular, it is provided that a front side of the filling element and a front side of the cap are arranged flush to each other in a plane extending perpendicular to the vibration direction at the distal end of the handpiece.

Preferably, it is provided that the cap is connected to the housing by a further snap connection for fixation in an axial direction. Thus, it is possible to permanently connect the cap element and to permanently fix the filling element at the distal end of the housing. Preferably, it is provided that the further snap connection is realized by a hook- or harpoon-like snap elements, protruding from either the inner side of the cap and/or the outer side of the housing, wherein the protruding snap elements interacts with a complementary shaped recess of the outer side of the housing and/or inner side of the cap in a mounted or assembled state, respectively.

Preferably, it is provided that for fixing the cap against rotation about an axis being parallel to the vibration direction, the transducer and the housing interact with each other in a form-fitting manner in circumferential direction. For example, the cap and/or housing, in particular the outside of the housing, includes corresponding protruding elements and/or grooves, which guarantee that the cap element is prevented from rotating about an axis being parallel to the vibration direction. As a result, the rotation of the cap is avoided, which simplifies handling of the handpiece since the operator is not disturbed by any kind of movement of the cap being located at the distal end of the handpiece.

Furthermore, it is provided that the cap has an outer diameter, being larger than an outer diameter of the housing, in particular at the distal end of the housing. As a result, there is a step-like shape in the course at the outside of the handpiece, especially in the transition section between the section being formed by the housing and the section being formed by the cap. Such a step-like course informs the operator about his position, when he is handling the handpiece. Thus, this step-like shap can be used for orientating and therefore simplifies handling the handpiece.

Preferably, the transducer is a Langevin transducer. Such a Langevin transducer includes a back mass, being made from a dense and rigid material for forming a counterweight or counterbalance. Furthermore, such a transducer includes a sonotrode and at least one piezo element, preferably a stack of piezo elements for translating an electronic voltage of the piezo element to an extension of the dimension of the piezo-element for creating the vibrational movement in a direction parallel to the vibration direction. The sonotrode being made from a material significantly lighter than the back mass performs the vibration, in particular at its distal end, the distal end of the sonotrode performing the vibrations having the highest amplitude.

Preferably, the cap has an outer diameter being smaller than 15 mm, preferably smaller than 10 mm and being more preferably about 9.5 mm and/or an inner diameter being smaller than 10 mm, more preferably smaller than 7.5 and most preferably about 6 mm.

Another subject matter of the present disclosure is a transducer for a tool according to the present invention. All benefits and specifics being discussed and mentioned in context of the tool applies analogously for the transducer and vice versa.

Another subject matter of the present invention is a method for assembling a tool according to the present disclosure, comprising
- providing a housing and a transducer,
- inserting the transducer into the housing via an opening at a proximal end of the housing, and
- moving the transducer within the housing until a snap connection between the housing and transducer is established for an axial fixation of the transducer inside the housing.

All specifics and benefits being introduced and mentioned in context of the tool applies analogously for the method and vice versa.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically illustrates a tool for medical treatment according to the state of the art,
- **Fig. 2**: schematically illustrates a tool according to a first preferred embodiment of the present invention,
- **Fig. 3**: schematically shows a detailed view inside the tool of figure 2,
- **Fig. 4**: schematically shows another detailed view inside the tool of figure 2,
- **Fig. 5**: schematically illustrates a tool according to a second preferred embodiment of the present invention,
- **Fig. 6**: schematically shows a detailed view inside the tool of figure 5,
- **Fig. 7**: schematically shows a detailed view of the tools of figure 2 and 5, and
- **Fig. 8**: schematically shows another detailed view of the tools of figure 2 and 5, and

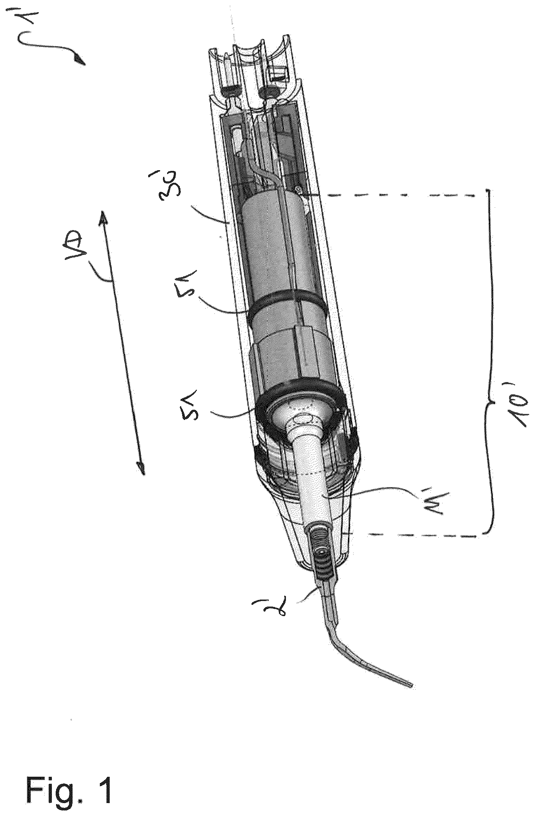

In **Figure 1** schematically a tool 1' for a medical treatment according to the state of the art in a 3D-cross sectional view is shown. Especially, Figure 1 illustrates a tool 1' for a dental treatment, in particular an ultrasonic scaler for removing dental calculus. Such a tool according to the state of the art (hereinafter also "tool") 1' uses a vibration movement, in particular an ultrasound vibration movement, for moving a tool tip 2' according to the state of the art (hereinafter also "tool tip") such that the tool tip 2', located at or next to dental calculus at a tooth, removes said dental calculus from the tooth being treated during operation. Preferably, the tool 1' includes a transducer 10' according to the state of the art (hereinafter also "transducer"), in particular being intended to cause the ultrasound vibration movement along a vibration direction VD. Especially, the transducer 10' includes at least one piezo element 12, preferably a stack 12' of piezo elements 12. These piezo elements 12 are typically configured such that an electrical energy can be transposed to a small expansion of the piezo element 12 in vibration direction VD that creates the ultrasound vibration movement of the tool tip 2'. Besides the piezo elements 12 the transducer 10' comprises a back mass 13 and a sonotrode 11', the sonotrode 11' being directly coupled to the tool tip 2'. It is also conceivable that the transducer 10' includes an adapter for mounting the tool tip 2' to the sonotrode 11'. Preferably, the stack 12' of piezo elements 12 is located between the sonotrode 11' and the back mass 13. In the embodiment illustrated in figure 1, the tool tip 2' is screwed to the sonotrode 11' via a thread.

In particular, the transducer 10' is a Langevin transducer, causing a vibration motion having a maximum amplitude at the front sides of the transducer 10', especially at the front sides of the sonotrode 11' and the back mass 13, the front sides of the sonotrode 11' and back mass 13 facing away from each other. In the near of the piezo element 12 or the stack 12' or the piezo elements 12 a node of the established vibration is caused during operating the tool 1'. Thereby, the tool tip 2' in figure 1 represents the scaler tip that interacts with a surface of a tooth, in particular with its outside, during dental treatment.

According to the state of the art it is typically provided that the transducer 10' is fixed within a housing 30' of the tool 1, in particular of a handpiece 3 of the tool 1, by sandwiching a collar section 15 of the transducer 10, the collar section 15 preferably protruding from the sonotrode 11' and being located at or close to the node of the established vibrations of the transducer 10' during operation. Alternatively, the state of the art is used to fix the transducer 10' by using O-rings 51 (as shown in figure 1) being placed close to the node. An embodiment including such O-rings 51 which have to be necessary located close to the node of the established vibrations during operation is illustrated in figure 1. The arrangement of this O-rings 51 or the collar section 15 close to the node is necessary, since in the near of the node or at the node the amplitude of the vibration is as small as possible and, therefore, a damping effect to the transducer 10' due to its fixing to the housing 30' is reduced. However, the arrangement of the O-rings 51 close to the node, which also establishes a sealing of the section including the electronic components and the piezo elements 12, is restricted to a very short distance along a direction parallel to the vibration direction VD. Furthermore, several components, which occupy space and increase the weight of the tool 1', are needed for performing the desired fixation of the transducer 10'. This is especially true for using strut elements protruding from the inside of the housing 30' for sandwiching the collar section 15 for realizing an axial fixation of the transducer 10' inside the housing 30'.

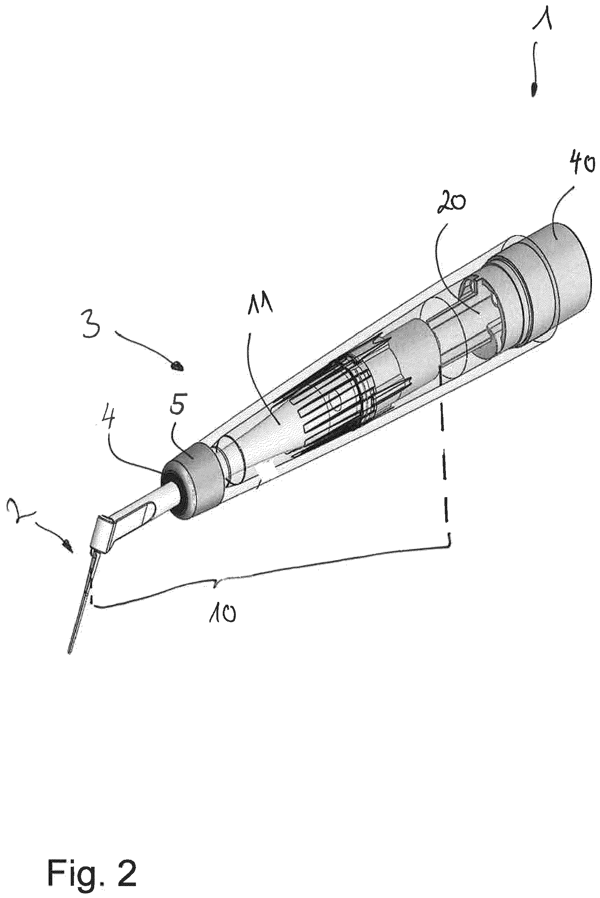

In **Figure 2****,** a tool 1 according to a first preferred embodiment of the present invention is illustrated. For example, the tool 1 differs from the tool 1 of figure 1 by its tool tip 2, i.e. the form of the scaler tip, and its arrangement at the sonotrode 11. Especially, the tool tip 2 is formed as a non-bent component. In other words: the tool tip 2 extends along an extending direction in form of a needle, i. e. the tool tip 2 has a straight course along the extension direction from a inserting section at a proximal end of the tool tip 2, being inserted into a recess in the interface section, to a pointed tip at the distal end of the tool tip 2. As a consequence, the tool tip 2 differs from the scaler tips known by the prior art that are typically bent for meeting the requirement that the tool tip 2 is curved forming an angle of around 120° relative to the vibration direction VD, in particular for meeting the requirements that are defined by an oral cavity geometry.

However, instead of using a screw section, which allows connecting the tool tip 2 to the moving part 10 by a screw mechanism, it is provided according to the embodiment shown in figure 2 to connect the tool tip 2 directly to the sonotrode 11 in an interface section, in particular without a screwing mechanism. Preferably, the tool tip 2 is connected to the sonotrode 11 in the interface section by a frictional-fitting and/or form-fitting, in particular without a screwing mechanism having threads. Especially, the tool tip 2 is connected to the interface section of the sonotrode 11 by a press fit connection. Depending on a strength of the press fit, the tool tip 2 is arranged or connected to the sonotrode 11 permanently or non-permanently, for example.

Furthermore, it is provided that the tool tip 2 is inserted in a recess wherein the recess is included in the distal end section of the sonotrode 11. Preferably, the distal end section of the sonotrode has a cylindrical - or ball - like shape. Thereby, the tool tip 2 extends in an extending direction being slanted relative to the vibration direction VD in the interface section 15. It turned out that by connecting a non-bent tool tip 2 such to the sonotrode 11 that the tool tip 2 itself extends slanted to the vibration direction VD of the sonotrode 10, it is possible to transfer the vibrational movement from the sonotrode 10 to the tool tip 2 in a more efficient way, compared to those scalers having a screw section for screwing the tool tip 2 to the sonotrode 11 of the tool.

Another benefit of using a non-bent, i. e. needle-like, tool tip 2 is the possibility of relying on new or different materials that, for example, are not able to be bent in a way sufficient to realize a bent tool tip 2 in form of a scaler of the prior art. Preferably, the extending direction and the vibration direction VD of the tool 1 having the non-bent tool tip 2 forms an angle that mainly corresponds to 120°, for meeting the requirements, being defined by the oral cavity geometry.

Furthermore, the tool 1 comprises a plug element 20 being located at the proximal end section of the housing 30 for supplying an irrigation fluid channel 9, which transports an irrigation fluid through the transducer 10. At the rear, i. e. proximal end of the plug-in element 20, a connecting element 40 is provided for providing pins and/or terminals to which electric supply lines or signal lines can be connected for electronically controlling the tool 1. The distal end of the housing 30 includes a filling element 4 and a cap 5.

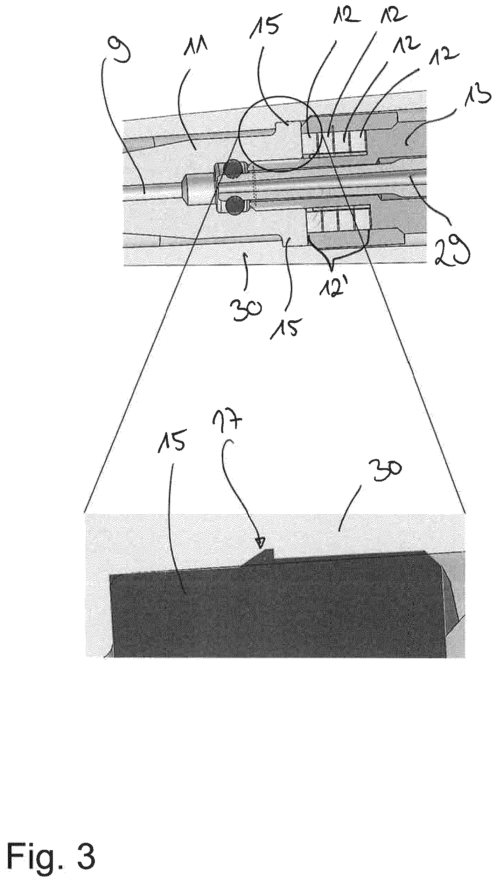

In **Figure 3****,** a detailed cross section view of the tool 1 of figure 2 is illustrated. In particular, it is provided for reducing the number of elements for fixing the transducer 10 that the transducer 10 is connected to the inside of the housing 30 by a snap connection, preferably by a press fit connection. This snap connection is intended to fix the transducer 10 against a movement or a shift along an axial direction, being parallel to the vibration direction VD of the transducer 10. Preferably, it is provided that the snap connection is realized by a hook-like snap element 17, preferably a harpoon-like snap element 17, which protrudes radially from the outer surface of the transducer 10, in particular of the sonotrode 11. Preferably, a protruding hook-like snap element 17 is located at the outside of a collar-like section 15, which itself protrudes from the sonotrode 11 radially. In particular, the collar-like section of the sonotrode 11 is located at or close to the node or the location of the node of the established vibration during operation. It turned out that as a result of the snap connection it is possible to establish an axial fixation with a reduced amount of components, in particular, without additional O-rings 51 or fixation elements, which protrudes from the inside of the housing 30 to the centre of the housing 30.

Furthermore, it turned out that the snap-like connection realizes a fixation, i. e. a rigid fixation, which improves the handling of the tool 1, since the interaction between the housing 30 and the fixed transducer 10 can be advantageously reduced. In particular, the use of a snap connection also reduces the damping effect of the fixation of the transducer 10, which is otherwise established by the fixations known from the prior art.

Furthermore, it is intended to insert the transducer 10 during the assembling of the tool at the rear end/ proximal end of the housing 30 and push or move the transducer 10 along a direction being parallel to the vibration direction VD until the snap connection is established. Preferably, the hook-like snap element 17, such as a harpoon, has a ramp-like shape such that inserting is simplified, while removing the transducer 10 is prohibited or difficult due to the side wall of the snap element 17, extending mainly perpendicular from the outside of the sonotrode 11 to form a form-fitting connection within a corresponding recess in the inside of the housing 30. It is also conceivable that the protruding snap element 17 is located at the inside of the housing 30 and the hook-like snap element 17 is introduced into a corresponding recess in the sonotrode 11, in particular at the collar section 15 for forming the snap connection. Figure 3 shows that the back mass 13 of the transducer 10, passes partially through the stack 12' of piezo elements 12, the back mass 13 receiving the supply line 29 for supplying an irrigation fluid channel 9, an interface section between the supply line 29 and the irrigation fluid channel 9 being downstream to the collar section 29.

Furthermore, the collar section 15 is of advantage for guiding the transducer 10 during inserting the transducer 10 into the housing 30. Furthermore, it is provided that the collar section 15 of the sonotrode 11 abuts a step-like course of the inner side wall in addition to the form-fitting connection, being realized by the snap connection. Thus, the transducer 10 is fixed inside of the housing 30. For avoiding any liquid inside the housing 30 a sealing element is located between the sonotrode 11 and the supply line 29, in particular between the pot-like recess inside of the sonotrode 11 and the supply line 29, the pot like recess being intended for receiving the front-end of the supply line 29.

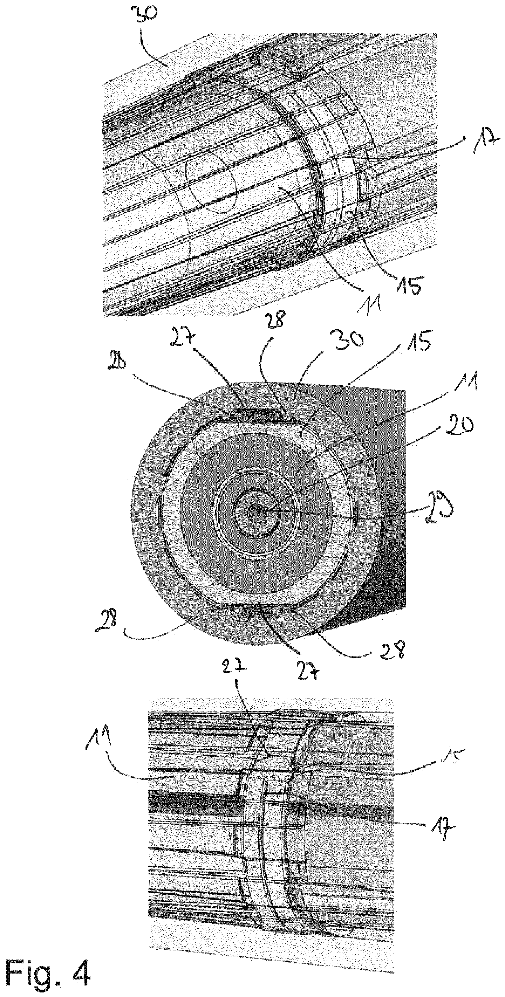

In **Figure 4****,** other detailed views on the tool 1 of figure 2 are presented. In particular, the illustrations of figure 4 concern the configuration of the transducer 10 and the inside of the housing 30 for avoiding a rotational movement of the transducer 10 about an axis being parallel to the vibrational direction VD. While the snap connection can establish an axial fixation of the transducer 10, it is additionally provided to prevent the transducer 10 from rotating about the axis being parallel to the rotation direction. In particular, it is provided that the housing 30 and the transducer 10 form a key lock system. In the exemplary embodiment of figure 4, the outside of the collar section 15, in particular the course of the outside in a plane being perpendicular to the vibration direction VD, includes two flat regions 27 being located opposite to each other. For forming a form-fitting connection in a circumferential direction, the inside or inner side wall of the housing 30 has at least one stop elements 28, which in the mounted or assembled state contact or abuts the flat region 27 at the outside of the collar section 15. As a result, a rotational movement along the circumferential direction is prevented. It is also conceivable that the outside of the collar section 15 forms a polygon, which interacts with the corresponding course of the inside of the housing 30.

The use of flat regions 27 and stop elements 28 as illustrated in figure 4 has the benefit, that there is a free space realized between the collar section 15 and the inner side wall of the housing 30, which can be used for wires or conductors, which for example have to supply a light source with electrical energy at the distal end of the handpiece 3. Furthermore, the key lock system, being illustrated in figure 4 makes a corresponding orientation of the transducer 10 necessary when the transducer 10 is inserted into the housing 30 for assembling the tool 1. Preferably, it is provided that the radial producing snap element 17 is located in the middle of the collar section 15 in the direction parallel to the vibration direction VD. Furthermore, the lifetime of the tool 1 is improved due to the increased flexibility and the lowered internal constraints. Especially, the axial symmetry facilitates the assembly.

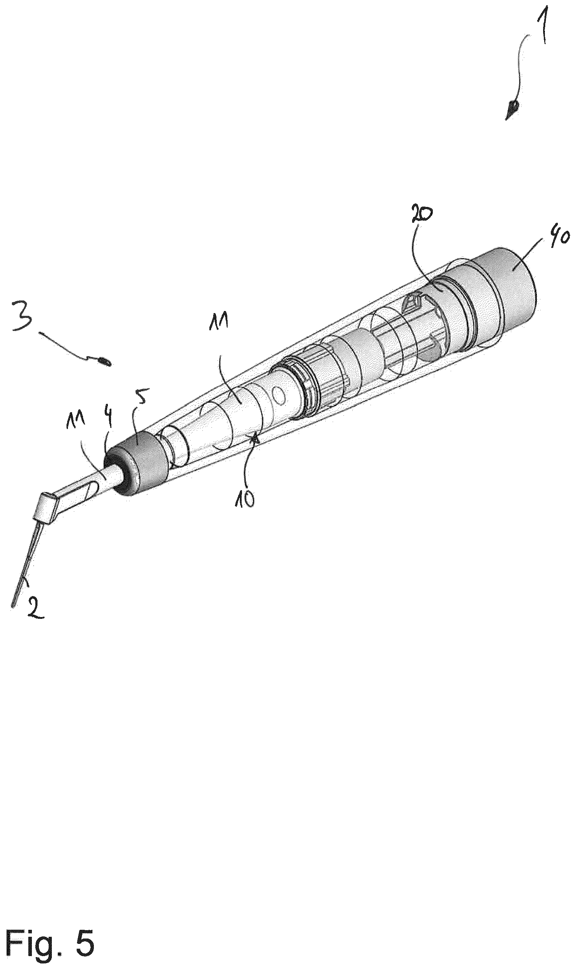

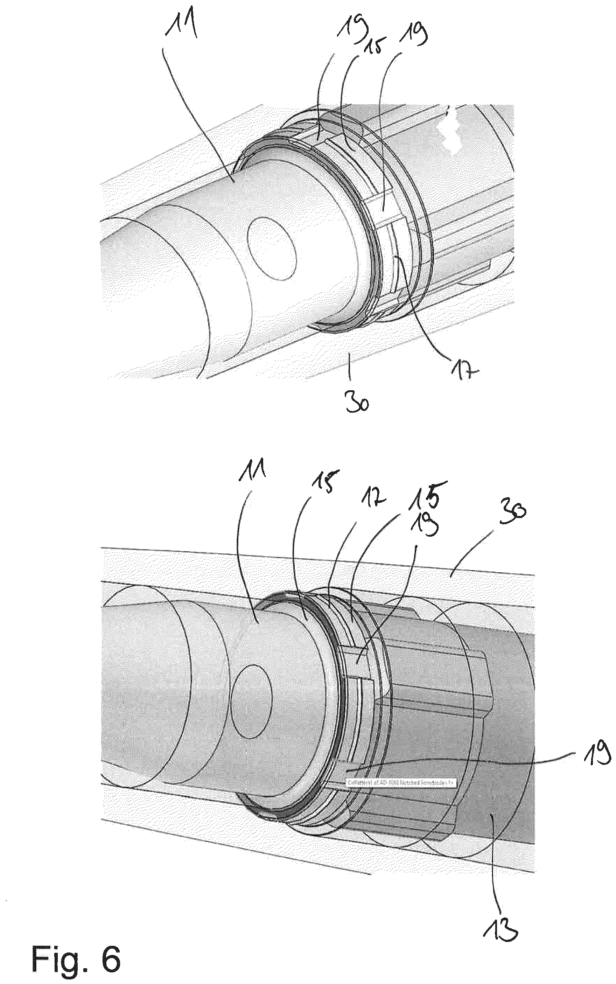

In the **Figures 5** **and** **6****,** a second preferred embodiment of the tool 1 according to the present invention is shown. The embodiment of figure 5 mainly distinguishes from the embodiment illustrated in the figures 2 to 4 by the means for preventing the transducer 10 from rotating about an axis being parallel to the vibration direction VD. Instead of the key lock system, being discussed in the embodiment of the figures 2 to 4, the embodiment of figure 5 uses hook-like snap elements 17 preferably at the inside of the housing 30, which interacts with corresponding grooves 19 at the collar section 15. Especially, the grooves 19 extends along an axial direction and mainly interrupts the collar-like section 15. Preferably, more than 3, more preferably more than 5 grooves 19 are provided for causing a rotational fixation of the transducer 10 inside the housing 30. Especially, an even number of grooves, such as six grooves, are provided. Preferably, it is provided that there is a snap connection, which establishes a form-fitting interaction between the collar section 15 of the sonotrode 11 at the inside of the housing 30 along a circumferential direction. Such a collar-like section 15 having grooves 19 and interacting with corresponding hook-like snap elements 17 at the inside of the housing 30 allows introducing the transducer 10 not-orientated into the housing 30. After the axial fixation by the snap connection the housing 30 and the transducer 10 can be rotated to each other about the axis being parallel to the vibration direction VD until a form-fitting connection along the circumferential direction is established. As a result, it is not necessary to orientate the transducer 10 properly before inserting the transducer 10 inside the housing 30. This simplifies the assembling of the tool 1.

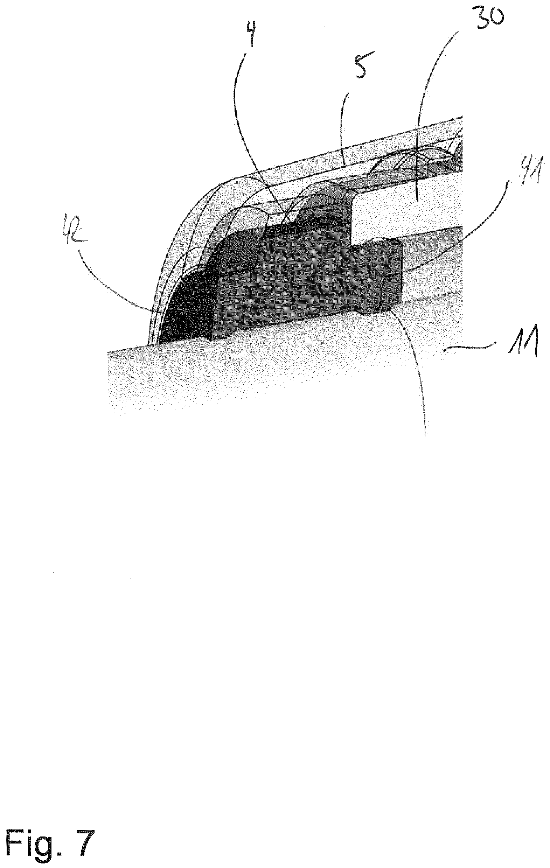

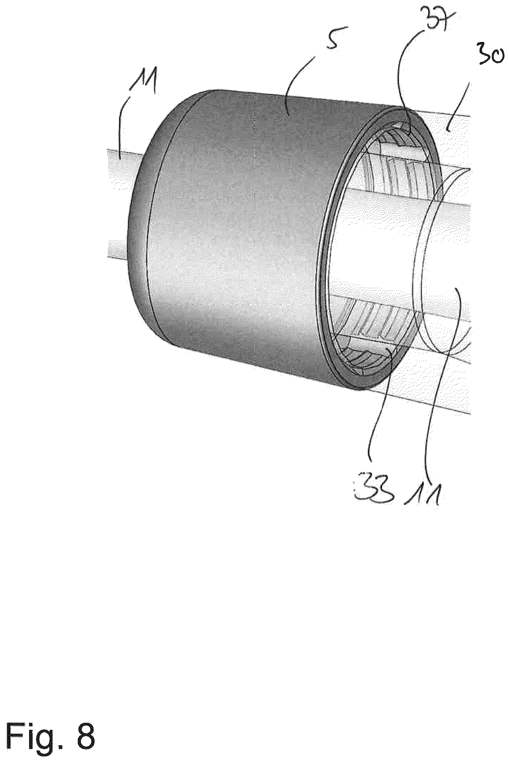

In **Figures 7** **and** 8 the distal end of the housing 30 of the tool 1 is illustrated. This configuration is used in both embodiments illustrated in the figures 2 to 6. Due to the fixation, it is possible to avoid using O-rings 51 being located close to the node or the location of the node of the vibrations.

In contrast, it is possible to locate a filling element 4 for sealing and bearing the sonotrode 11 of the transducer 10 at the distal end of the housing 30. Using such a filling element 4 establishes a waterproof tool, which does not have to be disassembled for cleaning the components to meet the hygienic requirements being necessary during use of the tool 1. Especially, the use of the filling element 4 at the distal end increases the regions of the handpiece 3, which can be sealed compared to the comparably small section being sealed by the O-rings 51 in figure 1 viewed in an axial direction. Furthermore, the filling element 4 is intended to guide the transducer 10 during inserting the transducer 10 in the housing 30 as well as during the operation stabilizing the vibration movement. For avoiding too much damping by the filling element 4, the inside of the ring-shaped filling element 4 includes at least one protrusion 41, which produces radially from the inner wall side of the ring-shaped filling element 4 to its centre. Preferably, the filling element 4 includes besides this one protrusion 41 another further protrusion 42, wherein the at least one protrusion 41 and the at least one further protrusion 42 are located at the distal and proximal end section of the filling element 4, respectively. Thus, only a first contact section of the protrusion 41 and a second contact section of the further protrusion 42 are generated such that the filling element 4 does not contact the sonotrode 11 by its whole inner side. Preferably, the at least the further protrusion 42 of the filling element 4 forms a sealing lip for preventing dust from entering into the housing 30.

Furthermore, it is provided that the at least one protrusion 41 at the proximal end of the filling element 4 has an O-ring shape, i. e. it is formed by two ark-like shaped protrusions, which contacts the inner side wall of the housing 30 on the one hand and the outer side of the sonotrode 11 on the other hand. Especially, the ring shaped filling element 4 is profiled at its inner side and/or outer side. Furthermore, it is provided that the filling element 4 is fixed actually by a section, which protrudes radially outwards and is located in an axial direction between the cap 5 and the housing 30 for realizing a form-fitting connection between the cap 5 and the filling element 4 on the one hand and the housing 30, in particular, the front side of the housing 30 and the filling element 4 on the other hand. The cap 5, preferably the metallic cap, 5 surrounds and covers the distal end of the housing 30 and takes care of a fixation of the filling element 4. Preferably, it is provided that the cap 5 uses a further snap connection for an axial fixation of a cap 5 at the distal end of the housing 30. Furthermore, it is preferably provided that for realizing the further snap connection between the outside of the housing 30 and the inside of the cap 5, the cap 5 uses further snap elements 37, which protrude from the inside of the cap 5 inwardly. For a fixation, which prevents the cap 5 from rotating further grooves 33 are used, which interact with corresponding protrusions for forming the fixation.

Furthermore, it is provided that the housing 30 is sleeve-like and preferably tapers along a longitudinal axis or the axial direction, being parallel to the vibration direction VD of the transducer 10.

### Reference signs:

- 1: tool
- 1': tool
- 2: tool tip
- 2': tool tip
- 3: handpiece
- 4: filling element
- 5: cap
- 9: irrigation fluid channel
- 10: transducer
- 10': transducer
- 11: sonotrode
- 11': sonotrode
- 12: piezo element
- 12': stack
- 13: back mass
- 15: collar section
- 17: snap element
- 19: groove
- 20: plug-element
- 27: flat region
- 28: stop element
- 29: supply line
- 30: housing
- 30': housing
- 33: further groove
- 37: further snap element
- 40: connection element
- 41: protrusion
- 42: further protrusion
- 51: O-ring

## Claims

1. A tool (1) for a dental treatment comprising
- a handpiece (3) having a housing (30) and
- a transducer (10) having at least one piezo element (12) for causing a vibration movement along a vibration direction (VF),
wherein the transducer (10) is connected to the housing (30) by a snap connection for an axial fixation, wherein the snap connection is realized by a hook-like, harpoon-like or an anchor-like snap element being located at the inner side of the housing (30) and/or the outer side of the transducer (10), wherein for bearing and/or for sealing the transducer (10) is surrounded by a filling element (4) at a distal end of the housing (30).

2. The tool (1) according to claim 1, wherein for fixing the transducer (10) against rotation about an axis being parallel to the vibration direction (VD) the transducer (10) and the housing (30) interact with each other by a form-fitting connection along a circumferential direction.

3. The tool (1) according to one of the preceding claims, wherein a profile for the snap connection and/or of the form-fitting connection is provided at a collar section (15) of the transducer (10), in particular at a collar section (15) of the sonotrode (11) of the transducer (10).

4. The tool (1) according to one of the preceding claims, wherein the filling element (4) has a ring shaped format an inner side of the ring-shaped filling element (4), facing to the transducer (10) in the assembled state.

5. The tool (1) according to claim 3 or 4, wherein the filling element (4) is made from an elastic material.

6. The tool (1) according to one of the preceding claims, wherein a cap (5) is arranged at the distal end of the housing (30).

7. The tool (1) according to claim 6, wherein the cap (5) is connected to the housing (30) via a further snap connection for a fixation in axial direction.

8. The tool (1) according to claim 6 or 7, for fixing the cap (5) against a rotation about an axis being parallel to the vibration direction (VD) the cap (5) and the housing (30) interact with each other in a form-fitting manner in a circumferential direction.

9. The tool (1) according to claims 6 to 8, wherein the cap (5) has an outer diameter being larger than an outer diameter of the housing (30).

10. The tool (1) according to one of the preceding claims, wherein the transducer (10) is a Langevin transducer.

11. The tool (1) according to one of the preceding claims, wherein the filling element (4) is at least partially sandwiched between the cap (5) and the housing (30) along a direction parallel to the vibration direction (VD).

12. The tool (1) according to claim 6, wherein the cap (5) has a diameter being smaller than 15 mm.

## Patentansprüche

1. Instrument (1) für eine zahnmedizinische Behandlung, umfassend
- ein Handstück (3) mit einem Gehäuse (30) und
- einen Wandler (10) mit mindestens einem Piezoelement (12) zum Erzeugen einer Vibrationsbewegung entlang einer Vibrationsrichtung (VF),
wobei der Wandler (10) mit dem Gehäuse (30) durch eine Schnappverbindung zur axialen Fixierung verbunden ist, wobei die Schnappverbindung durch ein haken-, harpunen- oder ankerartiges Schnappelement umgesetzt ist, das an der Innenseite des Gehäuses (30) und/oder an der Außenseite des Wandlers (10) angeordnet ist, wobei der Wandler (10) zur Lagerung und/oder Abdichtung an einem distalen Ende des Gehäuses (30) von einem Füllelement (4) umschlossen ist.

2. Instrument (1) gemäß Anspruch 1, wobei der Wandler (10) und das Gehäuse (30) miteinander über eine formschlüssige Verbindung entlang einer Umfangsrichtung, zum Fixieren des Wandlers (10) gegen eine Drehung um eine Achse, die parallel zur Vibrationsrichtung (VD) verläuft, zusammenwirken.

3. Instrument (1) gemäß einem der vorangehenden Ansprüche, wobei ein Profil für die Schnappverbindung und/oder die Formschlussverbindung an einem Kragenabschnitt (15) des Wandlers (10), insbesondere an einem Kragenabschnitt (15) der Sonotrode (11) des Wandlers (10), vorgesehen ist.

4. Instrument (1) gemäß einem der vorangehenden Ansprüche, wobei das Füllelement (4) eine ringförmige Ausgestaltung aufweist und eine Innenseite des ringförmigen Füllelements (4) dem Wandler (10) im zusammengebauten Zustand zugewandt ist.

5. Instrument (1) gemäß Anspruch 3 oder 4, wobei das Füllelement (4) aus einem elastischen Material hergestellt ist.

6. Instrument (1) gemäß einem der vorangehenden Ansprüche, wobei ein Deckel (5) am distalen Ende des Gehäuses (30) angeordnet ist.

7. Instrument (1) gemäß Anspruch 6, wobei der Deckel (5) mit dem Gehäuse (30) über eine weitere Schnappverbindung zur Fixierung in axialer Richtung verbunden ist.

8. Instrument (1) gemäß Anspruch 6 oder 7, wobei der Deckel (5) und das Gehäuse (30) miteinander formschlüssig entlang einer Umfangsrichtung, zum Fixieren des Deckels (5) gegenüber einer Drehung um eine Achse, die parallel zur Vibrationsrichtung (VD) verläuft, zusammenwirken.

9. Instrument (1) gemäß den Ansprüchen 6 bis 8, wobei der Deckel (5) einen Außendurchmesser aufweist, der größer ist als der Außendurchmesser des Gehäuses (30).

10. Instrument (1) gemäß einem der vorangehenden Ansprüche, wobei der Wandler (10) ein Langevin-Wandler ist.

11. Instrument (1) gemäß einem der vorangehenden Ansprüche, wobei das Füllelement (4) zumindest abschnittsweise zwischen dem Deckel (5) und dem Gehäuse (30) entlang einer Richtung parallel zur Vibrationsrichtung (VD) angeordnet ist.

12. Instrument (1) gemäß Anspruch 6, wobei der Deckel (5) einen Durchmesser aufweist, der kleiner als 15 mm ist.

## Revendications

1. Outil (1) pour un traitement dentaire, comprenant
- une pièce à main (3) ayant un boîtier (30), et
- un transducteur (10) comportant au moins un élément piézoélectrique (12) pour provoquer un mouvement de vibration le long d'une direction de vibration (VF),
dans lequel
le transducteur (10) est relié au boîtier (30) par une connexion par encliquetage pour une fixation axiale, la connexion par encliquetage étant réalisée par un élément d'encliquetage en forme de crochet, de harpon ou d'ancre situé sur le côté intérieur du boîtier (30) et/ou sur le côté extérieur du transducteur (10),
pour le support et/ou pour l'étanchéité, le transducteur (10) est entouré d'un élément de remplissage (4) à une extrémité distale du boîtier (30).

2. Outil (1) selon la revendication 1,
dans lequel, pour fixer le transducteur (10) à l'encontre d'une rotation autour d'un axe parallèle à la direction de vibration (VD), le transducteur (10) et le boîtier (30) interagissent l'un avec l'autre par une connexion par complémentarité de forme le long d'une direction circonférentielle.

3. Outil (1) selon l'une des revendications précédentes,
dans lequel un profil pour la connexion par encliquetage et/ou la connexion par complémentarité de forme est prévu à une portion de collet (15) du transducteur (10), en particulier à une portion de collet (15) de la sonotrode (11) du transducteur (10).

4. Outil (1) selon l'une des revendications précédentes,
dans lequel l'élément de remplissage (4) a un format en forme d'anneau sur un côté intérieur de l'élément de remplissage en forme d'anneau (4), faisant face au transducteur (10) à l'état assemblé.

5. Outil (1) selon la revendication 3 ou 4,
dans lequel l'élément de remplissage (4) est réalisé en un matériau élastique.

6. Outil (1) selon l'une des revendications précédentes,
dans lequel un capuchon (5) est disposé à l'extrémité distale du boîtier (30).

7. Outil (1) selon la revendication 6,
dans lequel le capuchon (5) est relié au boîtier (30) par une autre connexion par encliquetage pour une fixation dans la direction axiale.

8. Outil (1) selon la revendication 6 ou 7,
dans lequel, pour fixer le capuchon (5) à l'encontre d'une rotation autour d'un axe parallèle à la direction de vibration (VD), le capuchon (5) et le boîtier (30) interagissent l'un avec l'autre par complémentarité de forme dans une direction circonférentielle.

9. Outil (1) selon les revendications 6 à 8,
dans lequel le capuchon (5) a un diamètre extérieur supérieur au diamètre extérieur du boîtier (30).

10. Outil (1) selon l'une des revendications précédentes,
dans lequel le transducteur (10) est un transducteur de Langevin.

11. Outil (1) selon l'une des revendications précédentes,
dans lequel l'élément de remplissage (4) est au moins partiellement pris en sandwich entre le capuchon (5) et le boîtier (30) le long d'une direction parallèle à la direction de vibration (VD).

12. Outil (1) selon la revendication 6,
dans lequel le capuchon (5) a un diamètre inférieur à 15 mm.
